# EUROPEAN PATENT SPECIFICATION

(11) **EP 2 866 625 B1**
(45) Date of publication and mention of the grant of the patent: **27.07.2016**
(21) Application number: 13785640.7
(22) Date of filing: 29.08.2013
(51) Int. Cl.: A47J 43/08, F24C 15/00, F24C 15/10

(54) **COOKING STOVE HAVING A DRIVE ASSEMBLY FOR DRIVING A FOOD PROCESSING ASSEMBLY IN A PAN**
GERÄT ZUR ZUBEREITUNG VON LEBENSMITTELN
APPAREIL POUR LA PRÉPARATION D'ALIMENTS

(30) Priority: 29.08.2012 EP 12182259; 25.10.2012 EP 12189873
(43) Date of publication of application: 06.05.2015
(73) Proprietor: Koninklijke Philips N.V., 5656 AE Eindhoven (NL)
(72) Inventor: LEIJENAAR, Sybren Yme, NL-5656 AE Eindhoven (NL); JORNA, Cornelis Jozef, NL-5656 AE Eindhoven (NL); HAMBURG, Marco Christiaan, NL-5656 AE Eindhoven (NL)
(74) Representative: de Haan, Poul Erik
(86) International application number: PCT/IB2013/058106
(87) International publication number: WO 2014/033652

(56) References cited:
- US-A- 3 538 341
- US-A1- 2008 264 927

## Description

### FIELD OF THE INVENTION

The present invention relates to a cooking stove having a drive assembly for driving a food processing assembly in a pan to be used with the cooking stove, wherein the drive assembly is associated with a stove base of the cooking stove for supporting a pan, wherein the drive assembly comprises driven movement transferring means which are movably arranged in the cooking stove, having a coupling portion which is adapted to couple to the food processing assembly for transferring a movement to the food processing assembly, and wherein the drive assembly further comprises pan fixating means for engaging the pan and thereby preventing the pan from moving with the movement transferring means during operation of the drive assembly.

### BACKGROUND OF THE INVENTION

In the field of preparing food, many appliances are available which are intended to facilitate processes involved with cooking. For example, when a person wants to roast pieces of meat and has to perform this process in a conventional manner, he/she is compelled to take a pan, to fill the pan with the pieces of meat and probably also some oil or the like, and to put the pan on a cooking stove and activate the cooking stove for heating the content of the pan. Furthermore, the person needs to stir the pieces of meat, at least from time to time, by means of a suitable stirring tool, in order to avoid uneven cooking and possible scorching of the pieces of meat. Hence, the person needs to play a very active role in the cooking process and has no other choice but to stay in the kitchen until the food is ready. However, it is also possible to use a special appliance for performing the cooking process, which is especially adapted to function without any human intervention after having been filled with the ingredients as desired and being switched on. In that case, a person does not need to stay in the kitchen for a long time and has an opportunity to spend more time with family and/or friends, for example.

US 2008/190301 discloses an example of a special appliance as mentioned. In particular, US 2008/190301 relates to a stir cooker which comprises a container having an open top and a sidewall for holding food, a lid for closing the open top of container, a stirrer installed inside the container for stirring food, co-rotation prevention members installed inside the container on the sidewall for preventing food pieces from co-rotating with the stirrer as the stirrer rotates, a heating tube fixedly installed on a bottom of the container for heating food, a base support disposed underneath the container for supporting the container, a support member installed on the bottom of the container for adapting the container to stand in position on the base support, and a motor installed inside the base support and removably coupled with the stirrer for driving the stirrer to stir food.

Although a special appliance as mentioned is easy to use, there is an important disadvantage which is associated with this type of appliance. The fact is that the appliance occupies space on a kitchen top during use and as long as it is not stored. Also, the appliance is a relatively large kitchen appliance which occupies a considerable amount of space in a kitchen cupboard during storage. Furthermore, a kitchen hood is normally only present straight above the cooking stove, so that the effect of the operation of the kitchen hood in filtering and discharging cooking fumes from the appliance is minimal, assuming that the appliance is placed on the kitchen top rather than the cooking stove.

A solution to the above-mentioned problems is found by providing a cooking stove having at least one stove base which is adapted to support a pan and which comprises a motor for driving a stirring assembly or another type of food processing assembly in the pan. For example, US 2008/264927 discloses a cooking stove having a cooking platform which is equipped with a stove base for supporting a pan to cook food with automatic stirring or blending. The pan comprises a container for holding and cooking food, and a lid for closing an open top of the container. An adapting member having a generally tapered hollow cylindrical configuration is provided for supporting the container. An upper end of the member is fixedly engaged with a periphery of a bottom of the container, and a lower end of the member is extended downward to a predetermined distance, such that the container is adapted to stand on the stove base for cooking purposes, or on a horizontal kitchen top or a dinning table for serving food. When the pan is put in place on the stove base, an upper portion of the stove base receives the lower end of the adapting member. Two position guides protrude inward along a predetermined distance from an inner surface of the adapting member for guiding the container in position on the stove base and for preventing the container from rotating with respect to the stove base. The stove base comprises two base guides, and the position guides are adapted to be inserted into the base guides, such that the container can be removably locked in position on the stove base.

A stirrer is removably installed in the container, and serves for stirring food. Furthermore, an electrical heating tube is provided for heating food disposed inside the container. In particular, the heating tube is installed on an outside surface of the bottom of the container. A motor is installed underneath the stove base for providing rotation power to the stirrer. The motor is removably coupled with a drive shaft as the container is installed in position. The drive shaft is threaded through a central aperture on the bottom of the container. An upper end of the shaft is engaged with the stirrer and a lower end of the shaft is coupled with the motor through a coupling device. A seal device is provided for sealing off the interface between the shaft and the bottom of the container. Also, a bushing is provided, which is co-axial to the shaft, and which is fixedly and sealingly engaged with the bottom of the container. A packing is inserted inside a groove cut around the shaft. When inserted into the bushing together with the shaft, the packing is compressed and squeezed against the shaft and the bushing to seal off the interface thereof. The bushing extends upward to a predetermined height above the bottom of the container, such that an upper end of the bushing and the packing are disposed above the bottom of the container, and such that the requirement on the seal device is significantly reduced.

The stove base can be used for supporting devices of various applications, particularly cooking devices which include a stirrer for stirring food or a blade for blending food. An important advantage of this fact is that consumers do not have to buy various kitchen appliances for their cooking needs. Instead, they are able to buy various cooking devices or utensils, as accessories, which are much less expensive than full appliances, and which occupy less space in the kitchen.

Another alternative, disclosed in US 3,538,341, is to use magnetic coupling means to drive the food processing assembly.

### SUMMARY OF THE INVENTION

It is an object of the present invention to make improvements to a cooking stove having at least one stove base which is especially adapted to support a pan in which some kind of food processing assembly is used, and which is equipped with an assembly for driving the food processing assembly. Also, it is an object of the present invention to make improvements to a pan which is intended to be used with a cooking stove as mentioned.

The present invention provides a cooking stove having a drive assembly for driving a food processing assembly in a pan to be used with the cooking stove, wherein the drive assembly is associated with a stove base of the cooking stove, wherein the drive assembly comprises driven movement transferring means which are movably arranged in the cooking stove, having a coupling portion which is adapted to couple to the food processing assembly for transferring a movement to the food processing assembly, wherein the drive assembly further comprises pan fixating means for engaging the pan and thereby preventing the pan from moving with the movement transferring means during operation of the drive assembly, and wherein at least a component of the drive assembly and at least a component of the stove base defining a top surface of the stove base are displaceable with respect to each other in the cooking stove.

As mentioned in the foregoing, in order for a pan to be suitable for being used with the cooking stove known from US 2008/264927, there is a need for a special construction at a bottom side of a container of the pan. In particular, an adapting member is used, which has a generally tapered hollow cylindrical configuration, wherein an upper end of the member is fixedly engaged with a periphery of a bottom of the container. In a space encompassed by the adapting member, an end of the drive shaft which is threaded through a central aperture on the bottom of the container projects with respect to the bottom of the container for establishing a coupling with a shaft of the motor as the container is put in place on the relevant stove base. As explained in the foregoing, the adapting member plays a role in preventing the container from rotating during operation. Also, due to the application of the adapting member, the container can be stably supported on a basis like a kitchen top or a dinning table, wherein contact between the container and the basis takes place at a bottom end of the adapting member. What is more, it is necessary to have the adapting member in order to avoid that the end of the drive shaft is at a lowest level with respect to the bottom of the container, in order to prevent the container from assuming a tilted position with respect to a basis.

Conversely, in the context of the stove base according to the present invention, it is possible to have pans with an exterior bottom surface which is free from projecting members, so that the pans can be stably supported on a basis simply by contacting the basis through at least a considerable portion of the bottom surface, as is the case with many conventional pans, without a need for a member, detachable from the pan or fixed to the pan, for creating a space at the bottom side of the pan. In particular, according to the present invention, at least a component of the drive assembly and at least a component of the stove base defining a top surface of the stove base are displaceable with respect to each other in the cooking stove. As a result, among other things, it is possible to realize a situation in which a top portion of the drive assembly projects with respect to the top surface of the stove base, wherein the top portion as mentioned can extend all the way to the bottom of a pan to be used with the cooking stove, or even through the bottom, wherein components of the pan do not need to extend further down than a level of an exterior surface of the bottom. On the other hand, it is possible to have the entire drive assembly in a retracted position with respect to the top surface of the stove base, so that the stove base can be used for supporting conventional pans, i.e. when there is no need for using the drive assembly. In the following, for sake of clarity, the component of the stove base defining the top surface of the stove base will be referred to as top component of the stove base.

In principle, it is possible to make couplings between the pan fixating means and a pan having a bottom surface which is free from projections, and between the coupling portion of the movement transferring means and a food processing assembly as used in the pan when these components of the drive assembly are in a retracted position with respect to the top surface of the stove base, but doing so would require a use of separate members, which is not desirable. Hence, having a displaceable arrangement of at least a component of the drive assembly as proposed by the present invention is very practical. For sake of completeness, it is noted that the stove base where the drive assembly is present can be equipped with heating means such as an induction coil in a conventional manner, wherein it is only required to have room for allowing the movement transferring means and/or the pan fixating means to pass.

According to the present invention, varying between a situation in which a portion of the drive assembly projects with respect to the top surface of the stove base and a situation in which the entire drive assembly is positioned at a lower level than the top surface of the stove base is done on the basis of an arrangement in which at least a component of the drive assembly and at least a top component of the stove base are displaceable with respect to each other. In practice, mutual displacements of the component of the drive assembly and the top component of the stove base are in a substantially vertical direction. Within the scope of the present invention, it is possible to have an arrangement in which both the component of the drive assembly and the top component of the stove base are displaceable, but an arrangement in which only one of the component of the drive assembly and the top component of the stove base is displaceable is less complex and therefore preferred. It is noted that the top component of the stove base can comprise a plate which has a function in both supporting a pan and providing heat to the pan. Furthermore, for sake of completeness, it is noted that the stove base may comprise more than one component defining the top surface. Also, it is possible for more components of the stove base to be displaceable with respect to the drive assembly. Within the context of the present invention, the top component of the stove base is a relevant component when it comes to positioning with respect to the drive assembly, as the present invention is concerned with providing possibilities for using pans having exterior bottom surfaces which are free from projections on the stove base, including pans comprising a coupling assembly for coupling to the drive assembly on the one hand and a food processing assembly on the other hand, and conventional pans, which are to be supported on the top component.

It follows from the foregoing that it is advantageous for the cooking stove to be adapted in such a way as to be capable of allowing for a mutual position of the component of the drive assembly and the component of the stove base defining the top surface of the stove base in which the entire drive assembly is located at a lower level than the top surface of the stove base. For example, assuming a fixed position of the entire stove base in the cooking stove and a movable arrangement of at least a component of the drive assembly, it is possible to use the stove base where the drive assembly is present for supporting conventional pans, namely by designing the cooking stove with sufficient interior space for storing the entire drive assembly, wherein the stove base can be equipped with means for providing heat to the pans like a conventional stove base. In fact, according to the present invention, the stove base which is adapted to drive a food processing assembly in a pan may look like any other stove base and be operated like any other stove base, wherein the only difference resides in the fact that there is free access to pan fixating means and a coupling portion of movement transferring means in the stove base. However, according to an insight underlying the present invention, it is possible to have a design in which the accessibility of components of the drive assembly as mentioned involves only minimal adjustments with respect to a conventional cooking stove, wherein functionalities of the conventional cooking stove can be preserved. Hence, flexible use of the stove base where the drive assembly is present is realized, wherein the stove base is multifunctional, and wherein the presence of the drive assembly does not have a reducing effect on the number of pans which can be used on the cooking stove, no matter if a specially adapted pan and a food processing assembly are used, or not.

In a preferred embodiment, the entire drive assembly is displaceable between a first position in the cooking stove and a second position in the cooking stove, wherein the first position is the position in which the entire drive assembly is located at a lower level than the top surface of the stove base, wherein the second position is a position which is at a higher level with respect to the top surface of the stove base than the first position, and in which at least a portion of the pan fixating means extends beyond the top surface of the stove base, and wherein the cooking stove comprises means for displacing the drive assembly from one position to another.

By having a displaceable arrangement of the drive assembly, it is possible to retract the drive assembly when there is no need for using this assembly, so that the stove base where the drive assembly is present can be used for supporting conventional pans as explained in the foregoing. The first position is a position which is a lowest position in a normal orientation of the cooking stove. In this position, nothing of the drive assembly extends beyond a top surface of the stove base. The first position is a position which is associated with a situation in which there is no need for using the drive assembly. The second position is a higher position, which is associated with a situation in which the drive assembly is to be operated, and in which the movement transferring means will be driven, and the pan fixating means will be available for engaging the pan.

The drive assembly can be displaceable to a third position which is at a higher level with respect to the top surface of the stove base than the second position, and wherein the means for displacing the drive assembly are associated with means for detecting a force exerted on the pan fixating means when the drive assembly is in the third position. Hence, the drive assembly can be displaceable to an even higher position than the second position, in which a pan can be lifted off the stove base, and in which the weight of the pan and the content of the pan can be determined by detecting a force exerted on the pan fixating means in that position. On the basis of this possibility, the functionality of the cooking stove can be enlarged with a weighing function in the area where the drive assembly is present.

According to a practical possibility, the food processing assembly is a stirrer or a blender or the like, which is supposed to be rotated in the pan about an axis which coincides with a central axis of a standing wall of the pan, which can also be denoted as a longitudinal axis of the pan. In such a practical case and in any other case in which a rotary movement of the food processing assembly needs to be realized, it is advantageous for the movement transferring means to be rotatably arranged in the cooking stove, and for the cooking stove to comprise driving means which are adapted to making the movement transferring means perform a rotary movement.

It is advantageous for the movement transferring means and the pan fixating means to be closely arranged to each other as a unit, as in that way, it is achieved that in the cooking stove according to the present invention, the means which are suitable to be used for transferring a movement to a food processing assembly and the means which are suitable to be used for preventing the pan from moving with respect to the cooking stove are located in one and the same area. In practical cases, the area can be an area which corresponds to an area at a centre of the pan to be used with the cooking stove. Such an area will normally be at a centre of a stove base, and can very well be identified on a cooking stove for that reason. In this respect, it is noted that it is known for a cooking stove to comprise marks for indicating a periphery of a stove base, for example. Assuming a displaceable arrangement of the entire drive assembly in the stove base, it is very practical to have the components of the drive assembly in a defined area, as in that way, it is possible to move one component along with the other, wherein there is no need for complex driving means acting at different positions.

A mutual positioning of the movement transferring means and the pan fixating means in which these means are closely arranged to each other as a unit has the advantage that there is no need for the relatively large adapting member extending downward from a periphery of a bottom of the container as known from US 2008/264927 for keeping the pan in a fixed position on the cooking stove during operation of the drive assembly. Moreover, there is no need for a complex design of the cooking stove, and adjustments of a pan with respect to a conventional pan can be minimal. In the cooking stove, there is the unit formed by the movement transferring means and the pan fixating means which is accessible from outside of the cooking stove. Hence, in the pan, elements of a coupling assembly for coupling the movement transferring means to the food processing assembly and for coupling the pan to the pan fixating means can be concentrated at one place in the pan, as will be explained later.

For sake of completeness, it is noted that when a coupling is mentioned in this text, the term is intended to cover both a direct coupling, i.e. a coupling which involves direct contact between elements, and an indirect coupling, i.e. a coupling which involves contact between elements through at least one other element. For example, in a practical embodiment of the cooking stove according to the present invention, the coupling portion of the movement transferring means is intended to be coupled to a food processing assembly in a pan to be used with the cooking stove through means which are incorporated in the pan.

The pan fixating means and the movement transferring means can be concentrically arranged. In particular, the movement transferring means can be at the centre of a concentric arrangement with the pan fixating means, and the pan fixating means can have an internal space for allowing the movement transferring means to at least partially extend through the pan fixating means. In general, a concentric arrangement is a very compact arrangement, which contributes to simplicity of design.

In particular, the movement transferring means and the pan fixating means can be arranged such as to be adjacent to each other, with surfaces of the means facing each other, in order to have the closest possible arrangement of the means. In a concentric arrangement as mentioned in the foregoing, the arrangement of the movement transferring means and the pan fixating means may be such that at least a portion of an outer surface of the movement transferring means can face at least a portion of an inner surface of the pan fixating means.

It is practical for the movement transferring means to comprise a shaft. Furthermore, the pan fixating means may comprise a recess having a standing wall surrounding the shaft as seen in a longitudinal direction of the shaft, wherein an inner periphery of the standing wall has a non-circular shape. In such a case, the pan fixating means are suitable for receiving a member which is connected to the pan and which is adapted to snugly fit into the recess, wherein an outer periphery of the member as mentioned has the same non-circular shape as the standing wall of the recess. For sake of completeness, it is noted that within the framework of the present invention, it is also possible to have it the other way around, wherein the pan has a recess, and wherein the pan fixating means comprise a member to be inserted into the recess. In respect of the non-circular shape, it is noted that this shape may be a regular polygonal shape such as a triangular shape or a hexagonal shape.

The present invention also relates to a pan which is suitable to be used with a cooking stove as described in the foregoing, particularly a cooking stove in which at least one of movement transferring means and pan fixating means of a drive assembly and at least a top component of a stove base are displaceable with respect to each other in the cooking stove, and in which the movement transferring means and the pan fixating means of the drive assembly are closely arranged to each other as a unit. The pan according to the present invention comprises a coupling assembly which is arranged in a hole in a bottom of the pan, wherein the coupling assembly comprises fixedly arranged means for engaging the pan fixating means of the drive assembly of the cooking stove, and movably arranged means having coupling portions at opposite sides, wherein one of the coupling portions is a coupling portion for coupling to the coupling portion of the movement transferring means of the drive assembly of the cooking stove, and wherein another of the coupling portions is a coupling portion for coupling to a food processing assembly to be used in the pan.

An important difference between the pan according to the present invention and the pan known from US 2008/264927 relates to the positioning of the fixedly arranged means for engaging the pan fixating means of the drive assembly of the cooking stove. In the pan known from US 2008/264927, the fixedly arranged means as mentioned comprise the adapting member having a generally tapered hollow cylindrical configuration, which is fixedly engaged with the periphery of the bottom of the container/pan through an upper end thereof, and the position guides which protrude inward a predetermined distance from the inner surface of the adapting member. However, in the pan according to the present invention, all elements intended for interaction with the drive assembly of the cooking stove, either for realizing a movement of a food processing assembly or for keeping the pan in a fixed position on the cooking stove, are part of a coupling assembly which is arranged in a hole in the bottom of the pan. In this way, the pan is suitable for cooperating with the cooking stove in which movement transferring means and pan fixating means are jointly arranged in a certain area. As mentioned in the foregoing, that area can be a central area, so that it is feasible option of the coupling assembly and the hole in the bottom in which the coupling assembly is arranged to have a central position in the pan, i.e. to be located in an area at a position where a central axis of a standing wall of the pan intersects the bottom of the pan.

In a practical situation in which a food processing assembly is used which is adapted to be rotated, it is preferred for the movably arranged means of the coupling assembly to be rotatably arranged in the pan, so that the movably arranged means can be directly coupled to the food processing assembly if so desired, as there is no need for converting one type of movement into another.

Like the pan fixating means and the movement transferring means of the drive assembly of the cooking stove, the fixedly arranged means and the movably arranged means of the coupling assembly of the pan can be concentrically arranged. Furthermore, a most compact arrangement of the fixedly arranged means and the movably arranged means of the coupling assembly of the pan is possible, with surfaces of the means facing each other.

In general, in order to prevent the pan from following a movement of a food processing assembly in the pan, especially when the movement is a rotary movement, it is advantageous if the fixedly arranged means comprise engaging means having a non-circular periphery. Depending on the constructional details of the pan fixating means of the drive assembly of the cooking stove, such means can be a recess having a standing wall having a non-circular inner periphery, or an engaging portion having a non-circular outer periphery, for example. As mentioned in the foregoing, the non-round shape can be a regular polygonal shape such as a triangular shape or a hexagonal shape.

Advantageously, the movably arranged means of the coupling assembly comprise a member projecting from the bottom of the pan at an inside of the pan for supporting the food processing assembly to be used in the pan. It may be considered to keep the member as low as possible in the pan, such as to not hinder the use of a stick blender or the like in the pan when the food processing assembly is absent. Also, if the coupling assembly is kept as low as possible at the other side of the bottom of the pan, it may be achieved that the pan can still be supported by a flat surface, wherein contact between the bottom of the pan and the surface is not hindered by any element of the coupling assembly projecting too far from the bottom.

As an alternative, it may be considered to equip the pan with a tube member projecting from the bottom at the inside of the pan, and to allow the member of the movably arranged means of the coupling assembly to extend inside the tube member, wherein the tube member is open at a free end for allowing access to the member for coupling purposes or for allowing a free end of the member to project from the tube member, and wherein the member may be provided in the form of a shaft. With a tube member as mentioned, it is achieved that the coupling assembly is separated from the content of the pan, wherein it is preferred for the tube member to be at least as high as the standing wall of the pan. Also, the tube member has a function in protecting the coupling assembly from damage which might otherwise be caused by a stick blender or the like when such a tool is used in the pan. In case the pan does not comprise a tube member as described in the foregoing, it is advantageous if the coupling assembly comprises sealing means which are arranged between the fixedly arranged means and the movably arranged means of the coupling assembly, in order to prevent a situation in which content of the pan can leak through the bottom of the pan at the position of the coupling assembly.

As mentioned in the foregoing, due to the design of the cooking stove with which the pan is intended to be used, it is possible for an exterior surface at the bottom of the pan to be free from projecting members. In particular, the coupling assembly does not need to comprise any means which extend downward to outside the hole in the bottom of the pan. Furthermore, contrary to the teaching of the prior art, it is not required to use one or more projecting members for the purpose of preventing movement of the pan along with a food processing assembly to be used in the pan. Hence, the pan according to the invention can be of a design which is similar to a conventional design as far as an exterior outline of the pan is concerned.

The present invention further relates to a cooking combination of a cooking stove and a pan, wherein both the cooking stove and the pan meet the standards set by the present invention, in other words, wherein the cooking stove comprises a drive assembly having movement transferring means and pan fixating means which are closely arranged to each other as a unit, and wherein the pan comprises a coupling assembly having fixedly arranged means and movably arranged means which are located in a hole in the bottom of the pan, as explained in the foregoing. In the cooking combination according to the present invention, the pan is placed on a top surface of the cooking stove at a position where the drive assembly is present in the cooking stove, wherein the fixedly arranged means of the coupling assembly of the pan and the pan fixating means of the drive assembly of the cooking stove are in engagement with each other, and wherein one of the coupling portions of the movably arranged means of the coupling assembly of the pan is coupled to the coupling portion of the movement transferring means of the drive assembly of the cooking stove. In case a food processing assembly is used with the cooking combination, particularly in the pan of the cooking combination, another of the coupling portions of the movably arranged means of the coupling assembly of the pan is coupled to the food processing assembly.

In respect of the coupling between the movement transferring means of the drive assembly of the cooking stove and the movably arranged means of the coupling assembly of the pan, it is noted that one of the coupling portion of the movement transferring means and the relevant coupling portion of the movably arranged means may comprise a number of projections, and that another of the coupling portions as mentioned may comprise a corresponding number of recesses for snugly receiving the projections. According to another option, only one combination of a projection and a recess is used for realizing the coupling, wherein peripheries of the projection and a standing wall of the recess may have a non-circular shape.

In the context of the present invention, a number of different pans and food processing assemblies can be used with a single cooking stove, wherein the pans are equipped with similar coupling assemblies so as to have pans which are suitable to be coupled to one and the same drive assembly of the cooking stove.

The above-described and other aspects of the present invention will be apparent from and elucidated with reference to the following detailed description of a cooking combination of a cooking stove and a pan in which a stirrer is applied, wherein the cooking stove comprises a drive assembly for driving the stirrer, and wherein the pan comprises a coupling assembly which has functions in coupling the stirrer to movement transferring means of the drive assembly and coupling the pan to pan fixating means of the drive assembly.

### BRIEF DESCRIPTION OF THE DRAWINGS

The present invention will now be explained in greater detail with reference to the figures, in which equal or similar parts are indicated by the same reference signs, and in which:
figure 1 shows a perspective top view of a pan according to the present invention and a stirrer which is used in the pan;
figure 2 shows a perspective top view of the pan without the stirrer;
figure 3 shows a sectional view of the pan and the stirrer as placed on a cooking stove, wherein only a portion of the cooking stove is shown;
figure 4 shows a detail IV of figure 3 in order to clearly show elements of a drive assembly of the cooking stove and elements of a coupling assembly of the pan;
figure 5 shows a perspective top view of a portion of a plate of a stove base of the cooking stove and elements of the drive assembly;
figure 6 also shows a perspective view of a portion of the plate of the stove base of the cooking stove and elements of the drive assembly, wherein the elements of the drive assembly are retracted with respect to a top surface of the plate;
figure 7 shows a bottom view of a portion of the pan where the coupling assembly is located; and
figure 8 shows an alternative embodiment of the pan, wherein the pan comprises a tube member projecting from a bottom of the pan at a central position in the pan.

### DETAILED DESCRIPTION OF EMBODIMENTS

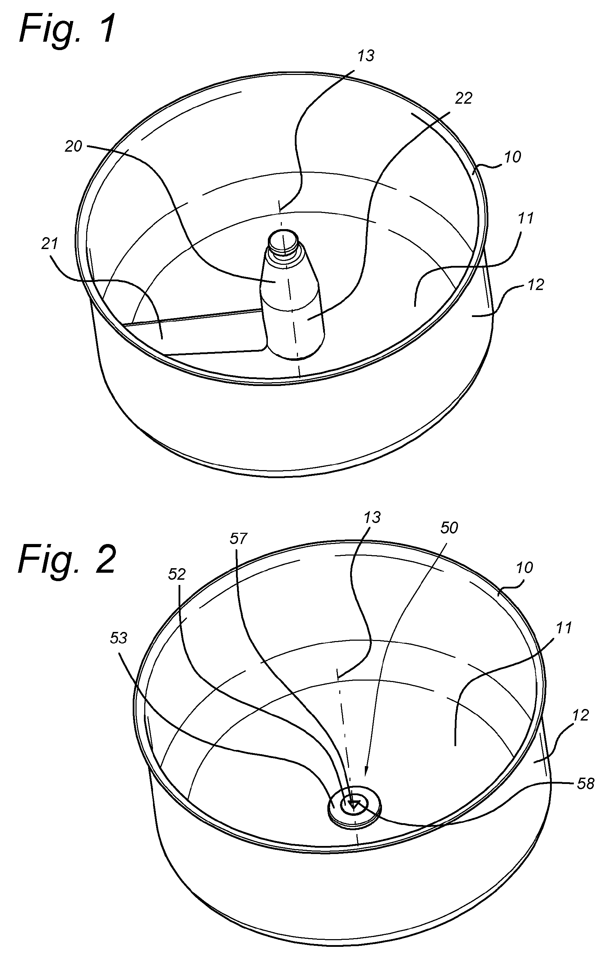

Figure 1 shows a pan 10 according to the present invention and a stirrer 20 which is used in the pan. Figure 2 shows the pan 10 without the stirrer 20.

The pan 10 is suitable for containing food items to be cooked (not shown), and is generally shaped like a tube which is closed at one side. In particular, the pan 10 has a bottom 11 and a standing wall 12 which is connected to a periphery of the bottom 11. In the shown example, the periphery of the bottom 11 has a circular shape, which does not mean that other shapes would not be feasible within the framework of the present invention.

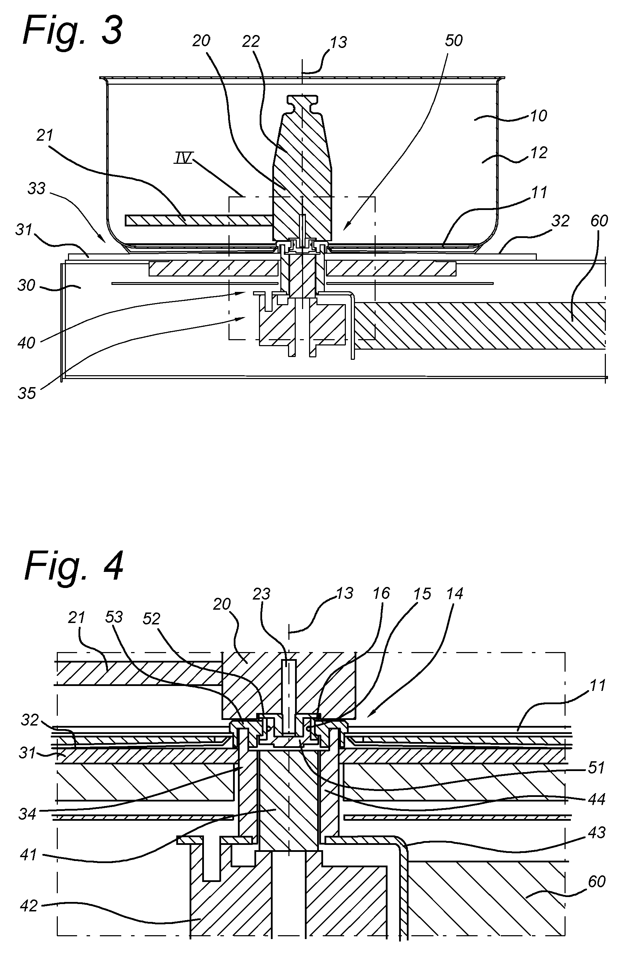

With reference to figures 3 and 4, it is noted that the pan 10 is intended to be used with a cooking stove 30 having a plate 31 with a support surface 32 which is part of a stove base 33 for supporting the pan 10. In the shown example, the cooking stove 30 is an induction cooking stove having a glass plate. Like conventional cooking stoves, the cooking stove 30 according to the present invention may comprise a number of stove bases, wherein each stove base is equipped with an induction coil for realizing a heating process of a pan and its content.

The orientation of the pan 10, the stirrer 20 and the cooking stove 30 as shown in figures 3 and 4 is a normal orientation. In particular, in the normal orientation of the pan 10, the bottom 11 of the pan 10 is at an under side, an open end of the pan 10 is at an upper side, and a longitudinal axis 13 of the standing wall 12 of the pan 10 has a substantially vertical orientation. In the normal orientation of the stirrer 20, a stirring blade 21 of the stirrer 20 is at an under side, and a shaft body 22 for carrying the blade 21 has a substantially vertical orientation. In the normal orientation of the cooking stove 30, the support surface 32 of the plate 31 of the stove base 33 is at an upper side. It is noted that terms like "bottom" and "top" as used in this text are to be understood such as to be related to the normal orientation of the pan 10, the stirrer 20 and the cooking stove 30, whereas such terms should not be understood such as to be restrictive to the scope of the present invention.

In order to avoid scorching of food items on the bottom 11 of the pan 10 and to ensure that food items are evenly spread through the pan 10, the stirrer 20 as mentioned is applied. In principle, it is possible for a user of the pan 10 to apply a hand-held tool for stirring the food items. However, the present invention is aimed at providing a possibility of having an automated stirring function in the pan 10. Moreover, the present invention is aimed at providing a possibility of having the automated stirring function in the pan 10 while the pan 10 is placed on a cooking stove 30, so that there is no need for a separate stove base for heating the pan 10 and driving the stirrer 20.

The stirrer 20 is intended to be rotated about a longitudinal axis of the shaft body 22, which coincides with the longitudinal axis 13 of the standing wall 12 of the pan 10 when the stirrer 20 is in position in the pan 10. During operation of the stirrer 20, the stirring blade 21 is made to move through the pan 10. Food items which are encountered by the stirring blade 21 are pushed away by the blade 21, as a result of which it is achieved that food items cannot stay too long at one position in the pan 10 which would otherwise lead to uneven cooking of the food items, namely at just one side, or even scorching.

According to the present invention, the cooking stove 30 comprises at least one stove base 33 which is equipped with a drive assembly 40 for driving the stirrer 20. The drive assembly 40 comprises a shaft 41 which is substantially vertically orientated, and a motor 42 for driving the shaft 41. The shaft 41 and the motor 42 may be provided as a unit in which the shaft 41 is the output shaft of the motor 42. The motor 42 is positioned at a level below a level of the support surface 32 of the plate 31 of the stove base 33, i.e. at a level below a top surface of the stove base 33, and is suspended from a support element 43 which is arranged in the cooking stove 30. The support element 43 also serves for supporting a tube 44 which is arranged such as to surround a major portion of the shaft 41. The shaft 41 has a function in transferring a movement to the stirrer 20, whereas the tube 44 has a function in engaging the pan 10 in order to keep the pan 10 in a fixed position on the cooking stove 30 during rotation of the stirrer 20. In view thereof, for sake of clarity, the shaft 41 will hereinafter be referred to as movement transferring shaft 41, and the tube 44 will hereinafter be referred to as pan fixating tube 44. Figures 3 and 4 illustrate the fact that the plate 31 of the stove base 33 is provided with a hole 34 for allowing the movement transferring shaft 41 and the pan fixating tube 44 to pass, so that the shaft 41 and the tube 44 are accessible from a top side, i.e. at a bottom side of the pan 10.

Advantageously, the movement transferring shaft 41 and the pan fixating tube 44 are located in one and the same area of the stove base 33, which is a central area in the shown example, corresponding to a central area of the pan 10. In the shown example, the shaft 41 and the tube 44 have a concentric arrangement, wherein the tube 44 is at the outside of the concentric arrangement, and wherein the shaft 41 is at the inside of the concentric arrangement. Particularly, the tube 44 is arranged such as to directly surround at least a portion of the shaft 41, wherein at least a portion of an inner surface of the tube 44 faces at least a portion of an outer surface of the shaft 41. The shaft 41 and the tube 44 form a compact unit for performing the functions of driving the stirrer 20 in the pan 10 and preventing the pan 10 from rotating with the stirrer 20 during operation of the drive assembly 40.

The pan 10 comprises a coupling assembly 50 for coupling the stirrer 20 to the movement transferring shaft 41, and coupling the pan 10 to the pan fixating tube 44. In particular, the coupling assembly 50 is accommodated in a central hole 14 of the bottom 11 of the pan 10. Like the drive assembly 40 of the cooking stove 30, the coupling assembly 50 of the pan 10 comprises movably arranged means and fixedly arranged means in a concentric arrangement, wherein the movably arranged means are located at the inside of the concentric arrangement and serve for coupling the stirrer 20 to the movement transferring shaft 41, and wherein the fixedly arranged means are located at the outside of the concentric arrangement and serve for coupling the pan 10 to the pan fixating tube 44. In particular, the movably arranged means of the coupling assembly 50 of the pan 10 comprise two interconnected components 51, 52, wherein one of the components 51, 52 is present at a side of the cooking stove 30 and the drive assembly 40, and will hereinafter be referred to as drive coupling component 51, and wherein another of the components 51, 52 is present at a side of an inside of the pan 10, and will hereinafter be referred to as stirrer coupling component 52. The fixedly arranged means comprise a hollow member 53 which is adapted to engage the pan fixating tube 44 of the drive assembly 40 of the cooking stove 30. The hollow member 53 as mentioned will hereinafter be referred to as engaging member 53. The engaging member 53 is connected to the bottom 11 of the pan 10 along its periphery, in its position in the hole 14 in the bottom 11 of the pan 10. The movably arranged coupling components 51, 52 are rotatably supported by the engaging member 53.

In order to prevent leakage of content of the pan 10 through the bottom 11 at the position of the coupling assembly 50, the pan 10 is equipped with sealing means, preferably sealing rings 15, 16. Figure 4 illustrates that one of the sealing rings 15, 16 can be arranged such as to surround the drive coupling component 51, and that another of the sealing rings 15, 16 can be arranged at a position between the stirrer coupling component 52 and the engaging member 53.

When the pan 10 is in place on the stove base 33, the drive coupling component 51 of the coupling assembly 50 of the pan 10 is coupled to the movement transferring shaft 41 of the drive assembly 40 of the cooking stove 30. Furthermore, the engaging member 53 of the coupling assembly 50 of the pan 10 is coupled to the pan fixating tube 44 of the drive assembly 40 of the cooking stove 30. As a result, when the motor 42 of the drive assembly 40 is activated, a rotary movement is transferred to the drive coupling component 51 of the coupling assembly 50 and the stirrer coupling component 52 connected thereto. At the same time, the pan 10 is prevented from following the rotary movement on the basis of the fact that the engaging member 53 of the coupling assembly 50 is coupled to the pan fixating tube 44 of the drive assembly 40. When the stirrer 20 is used in the pan 10, the stirrer 20 is coupled to the stirrer coupling component 52 of the coupling assembly 50. Hence, when the motor 42 of the drive assembly 40 is activated, the stirrer 20 is made to perform a rotary movement in the pan 10. Thus, by having the drive assembly 40 in the cooking stove 30, and by having the coupling assembly 50 in the pan 10, it is possible to have an automated stirring function in the pan 10, simply by putting the pan in an appropriate position on the cooking stove 30, inserting the stirrer 20 in the pan 10 at a central position, and activating the motor 42 of the drive assembly 40.

Within the framework of the present invention, the various couplings as mentioned in the foregoing can be realized on the basis of insertion of a projecting member in a recess for snugly receiving the member, in a substantially vertical direction, which coincides with an axis of rotation of the rotary movements of the stirrer 20 and the underlying components 51, 52, 41 of the coupling assembly 50 of the pan 10 and the drive assembly 40 of the cooking stove 30. In the direction of the rotary movements as mentioned, the projecting member and a standing wall of the recess are typically provided with a non-round peripheral shape in case the projecting member and the standing wall have a central position, i.e. a position at the axis of rotation.

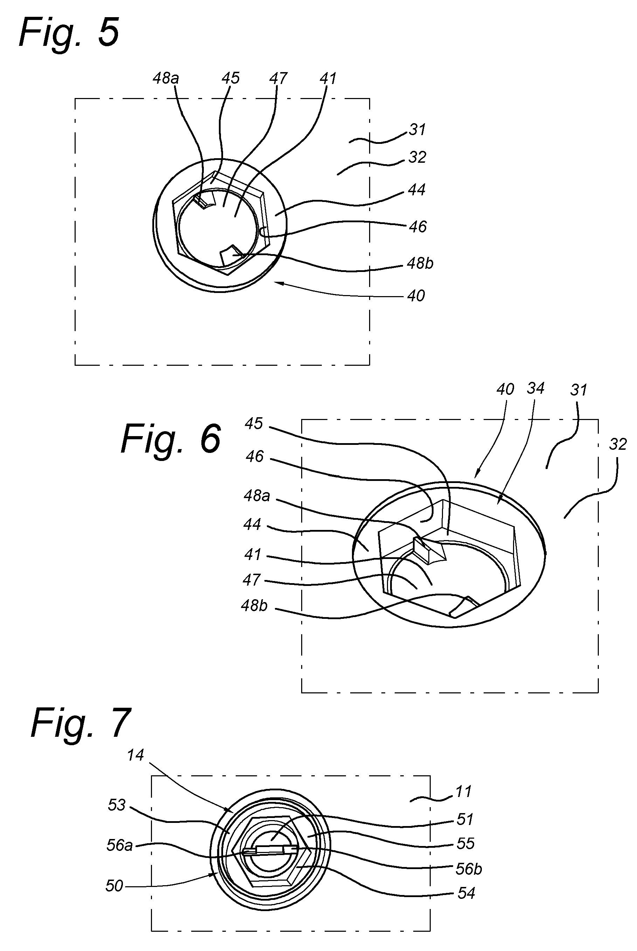

In particular, in the shown example, the pan fixating tube 44 has a recess 45 at a top end, wherein a standing wall 46 of the recess 45 has a hexagonal shape. In figures 5 and 6, a top view of a portion of the plate 31 of the stove base 33 is shown, especially a portion of the plate 31 where the movement transferring shaft 41 and the pan fixating tube 44 of the drive assembly 40 of the cooking stove 30 are present. In these figures, the hexagonal shape of the standing wall 46 of the recess 45 at the top end of the pan fixating tube 44 can clearly be seen. Figure 7 shows a bottom view of a portion of the bottom 11 of the pan 10 where the coupling assembly 50 is located. It can be seen that the engaging member 53 of the coupling assembly 50 comprises a central portion 54 surrounded by a recessed portion 55, wherein an outer periphery of the central portion 54 has a hexagonal shape.

Furthermore, in the shown example, the movement transferring shaft 41 of the drive assembly 40 of the cooking stove 30 comprises a coupling portion 47, which is positioned at a top end of the movement transferring shaft, and which has two projections 48a, 48b, as can be seen in figures 5 and 6. Figure 7 illustrates the fact that the drive coupling component 51 of the coupling assembly 50 of the pan 10 comprises recesses 56a, 56b at corresponding positions for snugly receiving the projections 48a, 48b as mentioned.

When the pan 10 is put in place on the cooking stove 30 in a proper manner, the central portion 54 of the engaging member 53 of the coupling assembly 50 of the pan 10 is inserted into the recess 45 of the pan fixating tube 44 of the drive assembly 40 of the cooking stove 30. As a result, the pan is fixed 10 with respect to the cooking stove 30 in such a way that the pan 10 is prevented from rotating about its longitudinal axis 13. Furthermore, the projections 48a, 48b of the coupling portion 47 of the movement transferring shaft 41 of the drive assembly 40 are inserted into the recesses 56a, 56b of the drive coupling component 51 of the coupling assembly 50. As a result, the drive coupling component 51 and the stirrer coupling component 52 connected thereto are made to follow a rotary movement of the movement transferring shaft 41 when the movement transferring shaft 41 is driven to perform such a movement.

When the stirrer 20 is intended to be used in the pan 10, the stirrer 20 needs to be inserted in the pan 10 with the stirring blade 21 down, and a coupling between the stirrer coupling component 52 of the coupling assembly 50 of the pan 10 and the shaft body 22 of the stirrer 20 is realized. In the shown example, a recess 57 having a standing wall 58 which is shaped as a triangle is present at a top end of the stirrer coupling component 52, as can clearly be seen in figure 2. In figures 3 and 4, it can be seen that the stirrer 20 comprises a central bottom projection 23 having an end which is suitable to be accommodated in the recess 57 of the stirrer coupling component 52. Hence, an outer periphery of the bottom projection 23 of the stirrer 20 has a triangular shape as well.

When the stirrer 20 is put in place in the pan 10 in a proper manner, the end of the central bottom projection 23 of the stirrer 20 is inserted into the recess 57 of the stirrer coupling component 52 of the coupling assembly 50 of the pan 10. As a result, the stirrer 20 is made to follow a rotary movement of the stirrer coupling component 52 and the underlying drive coupling component 51 of the coupling assembly 50 of the pan 10 and the movement transferring shaft 41 of the drive assembly 40 of the cooking stove 30 when the drive assembly 40 is activated.

It is noted that within the framework of the present invention, coupling portions 45, 46, 47, 48a, 48b of the movement transferring shaft 41 and the pan fixating tube 44 of the drive assembly 40 of the cooking stove 30, coupling portions 54, 55, 56a, 56b, 57, 58 of the drive coupling component 51, the stirrer coupling component 52 and the engaging member 53 of the coupling assembly 50 of the pan 10, and a coupling portion 23 of the stirrer 20 can be designed in any suitable manner for establishing the couplings as described in the foregoing, as long as it is eventually achieved that the stirrer 20 can be driven such as to rotate on the one hand, and that the pan 10 is prevented from moving along with the stirrer 20 on the other hand. For example, it is not essential for the couplings to be established on the basis of elements having complementary hexagonal or triangular shapes.

Both figures 5 and 6 show a portion of the plate 31 of the stove base 33 in which a hole 34 is present for allowing access to the movement transferring shaft 41 and the pan fixating tube 44 of the drive assembly 40 of the cooking stove 30. According to a preferred option existing within the framework of the present invention, the drive assembly 40 is displaceable in the cooking stove 30, particularly in a substantially vertical direction, i.e. a direction of longitudinal axes of the movement transferring shaft 41 and the pan fixating tube 44, which coincide with an axis of rotation of the movement transferring shaft 41. For the purpose of displacing the drive assembly 40 if so desired, the cooking stove 30 comprises a lifting module 60 which engages the support element 43 from which the motor 42 is suspended and on which the pan fixating tube 44 is supported. Within the framework of the present invention, the lifting module 60 can be designed in any suitable way. The lifting module 60 may comprise a motor and a rack gear, to mention one example.

In figures 3, 4 and 5, the drive assembly 40 is shown in an operational position, i.e. at a level at which it is possible for the drive coupling component 51 and the engaging member 53 of the coupling assembly 50 of the pan 10 to couple to the movement transferring shaft 41 and the pan fixating tube 44, respectively, of the drive assembly 40 of the cooking stove 30. When the drive assembly 40 is in this position, a portion of the pan fixating tube 44 extends above the top surface 32 of the plate 31 of the stove base 33. In figure 6, the drive assembly is shown in a retracted position, i.e. at a level at which the entire drive assembly 40 is at a lower position than the top surface 32, wherein the drive assembly 40 is accommodated inside an interior space 35 of the cooking stove 30.

With the displeable arrangement of the drive assembly 40 in the cooking stove 30, it is possible to retract the drive assembly 40 as long as there is no need for driving a stirrer 20 or another food processing assembly in a pan 10. Hence, it is possible to use the stove base 33 which is equipped with the drive assembly 40 for various purposes. When the drive assembly 40 is in the retracted position, the stove based 33 can be used as if the drive assembly 40 is not there at all.

The displaceable arrangement of the drive assembly 40 in the cooking stove 30 can be such that it is possible to put the drive assembly 40 to a position which is at a even higher level than the operational position. Hence, it is possible to lift a pan 10 off the plate 31 of the stove base 33, wherein the pan 10 remains supported on the movement transferring shaft 41 and the pan fixating tube 44. In such a situation, the weight of the pan 10 and its content can be determined, which may be useful in a cooking process, especially at the start of a cooking process, in order to determine whether a quantity if food ingredients as desired is present in the pan 10. Advantageously, the cooking stove 30 may be equipped with means for measuring a force exerted by the pan 10 on the support element 43 through the pan fixating tube 44 in such a situation, wherein it is practical for such means to be associated with the lifting module 60.

It follows from the foregoing that it is advantageous to have a displaceable arrangement of the drive assembly 40 in the cooking stove 30, wherein the drive assembly 40 may be placed in a first position, which is a lowest position in which the drive assembly 40 is retracted, so that the stove base 33 where the drive assembly 40 is present can be used as if the drive assembly 40 is not there at all, wherein the drive assembly 40 may be placed in a second position, which is a higher position at which a portion of the drive assembly 40 is popped out of the stove base 33, as it were, so that it is possible to couple the drive assembly 40 to a coupling assembly 50 of a pan 10, and wherein the drive assembly 40 may be placed in a third position, which is an even higher position for lifting a pan 10 off the cooking stove 30 and thereby having a possibility of determining the weight of the pan 10 and its content.

The cooking stove 30 according to the present invention may be equipped with means for allowing a user to control the operation of cooking stove 30, particularly the operation of the at least one stove base 33 of the cooking stove 30 comprising a drive assembly 40, and possibly other stove bases. It is advantageous to have means in the cooking stove 30 for allowing a user to control the level at which the drive assembly 40 is positioned, to control the operation of the motor 42, to activate a weighing function, etc. It is advantageous for the cooking stove 30 to also comprise means for displaying information, including information about the weight of a pan 10 and its content when the weighing function is activated.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

It is noted that the aspect of the invention which involves the close arrangement of the movement transferring means 41 and the pan fixating means 44 of the drive assembly 40 as a unit does not necessarily need to depend on the possibility of having the drive assembly 40 in a retracted position with respect to the top surface 32 of the stove base 33. In general, the present invention also relates to a cooking stove 30 having a drive assembly 40 for driving a food processing assembly 20 in a pan 10 to be used with the cooking stove 30, wherein the drive assembly 40 is associated with a stove base 33 of the cooking stove 30 for supporting a pan 10, wherein the drive assembly 40 comprises driven movement transferring means 41 which are movably arranged in the cooking stove 30, having a coupling portion 47, 48a, 48b which is adapted to couple to the food processing assembly 20 for transferring a movement to the food processing assembly 20, and pan fixating means 44 for engaging the pan 10 and thereby preventing the pan 10 from moving with the movement transferring means 41 during operation of the drive assembly 40, and wherein the movement transferring means 41 and the pan fixating means 44 are closely arranged to each other as a unit.

In the example as shown in the figures and described in the foregoing, a stirrer 20 is used in the pan 10. That does not alter the fact that the present invention is applicable to the use of any other type of food processing assembly in the pan as well. For example, the pan 10 may comprise a cover for closing the open end of the pan 10, and a cutting mechanism may be arranged in the cover, wherein an input shaft of the cutting mechanism may be provided with a coupling portion for coupling to the movably arranged means 51, 52 of the coupling assembly 50 of the pan 10, either directly or through one or more intermediate elements.

The present invention relates to various types of cooking stoves, including both stationary cooking stoves and mobile cooking stoves. The latter may serve as a base of home cookers, which could be used with conventional pans or other features as well, for example, in mobile homes. The number of stove bases of the cooking stove is not essential.

As an alternative to the arrangement in which displacements of the drive assembly 40 of the cooking stove 30 as required are automatically performed by means of a motor 42, the drive assembly 40 may comprise means for allowing a user of the cooking stove 30 to realize a relative movement of at least a component 41, 44 of the drive assembly 40 and at least a top component 31 of the stove base 33 by hand, such as a kind of lever construction, or the drive assembly 40 may comprise at least one removably arranged member, wherein the drive assembly 40 is designed such that when the member is absent, there is nothing that projects above the top surface 32 of the stove base 33. In the latter case, only when it is intended to use the drive assembly 40, a user of the cooking stove 30 needs to take the member and put it in place in the stove base 33.

In the example as shown, the drive assembly 40 is displaceable in the cooking stove 30 in order to be able to have a situation in which the drive assembly 40 is fully retracted with respect to the top surface 32 of the stove base 33 if so desired, and to have a situation in which the drive assembly 40 is at a higher level so that a coupling between the movement transferring shaft 41 of the drive assembly 40 and a coupling assembly 50 of a pan 10 can be readily established, and the pan 10 can be fixed on the stove base 33 on the basis of engagement of the pan fixating tube 44 of the drive assembly 40 and the coupling assembly 50 of the pan 10. That does not alter the fact that another possibility existing within the framework of the present invention involves a displaceable arrangement of the plate 31 of the stove base 33. In such a case, the retracted position of the drive assembly 40 is associated with a relatively high level of the plate 31, and the operational position of the drive assembly 40 is associated with a relatively low level of the plate 31.

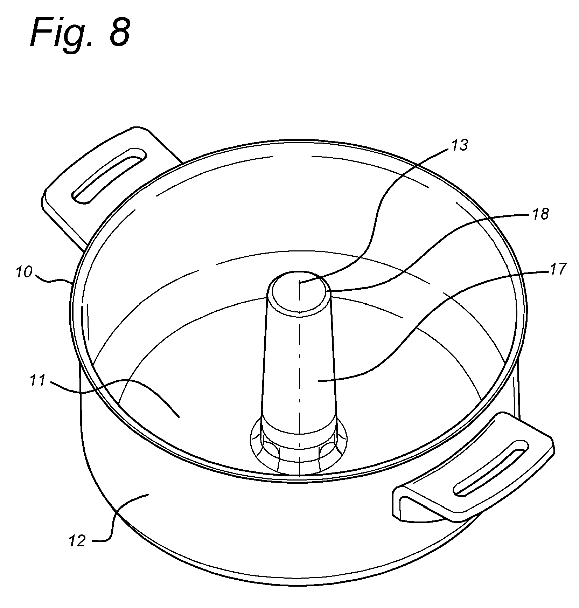

With reference to figure 8, it is noted that the sealing rings 15, 16 which are arranged in the coupling assembly 50 of the pan 10 in the shown embodiment of the pan 10 can be omitted in case the pan 10 comprises a tube member 17 projecting from the bottom 11 at the inside of the pan 10, at a central position in the pan 10, and being open at a free end 18. With such an embodiment of the pan 10, the stirrer coupling component 52 can be provided in the form of a shaft which is about as high as the tube member 17, extending inside the tube member 17. Also, it is possible for a free end of the stirrer coupling component 52 to project from the tube member 17 in such a case. Alternatively, the stirrer coupling component 52 may be the same as shown in figures 2-4, wherein the stirrer 20 or another food processing assembly to be used with the pan 10 comprises a central shaft extending inside the shaft body 22, so as to be capable of coupling to the stirrer coupling component 52 when the stirrer 20 is put in place in the pan 10. In any case, when the pan 10 comprises a tube member 17 as shown in figure 8, it is practical for the shaft member 22 of the stirrer 20 to be adapted to fit over the tube member 17. By having a tube member 17 in the pan 10, the coupling assembly 50 of the pan 10 is automatically separated from the content of the pan 10 under all circumstances, especially when the tube member 17 is at least as high as the standing wall 12 of the pan 10, which is a preferred option.

The present invention can be summarized as follows. A cooking stove 30 has a drive assembly 40 for driving a food processing assembly 20 in a pan 10 to be used with the cooking stove 30, wherein the drive assembly 40 is associated with a stove base 33 of the cooking stove 30 for supporting a pan 10. In particular, the drive assembly 40 comprises driven movement transferring means 41 which are movably arranged in the cooking stove 30, having a coupling portion 47, 48a, 48b which is adapted to couple to the food processing assembly 20 for transferring a movement to the food processing assembly 20, either directly or indirectly through at least one element, which element may be arranged in the pan 10. Furthermore, the drive assembly 40 comprises pan fixating means 44 for engaging the pan 10 and thereby preventing the pan 10 from moving with the movement transferring means 41 during operation of the drive assembly 40. Suitable driving means 42 may be provided for the purpose of driving the movement transferring means 41.

According to the present invention, at least a component 41, 44 of the drive assembly 40 and at least a component 31 of the stove base 33 defining a top surface 32 of the stove base 33 are displaceable with respect to each other in the cooking stove 30. According to a practical option, the relative displacement of the component 41, 44 of the drive assembly 40 and the component 31 of the stove base 33 is achieved on the basis of a displaceable arrangement of the entire drive assembly 40 in the cooking stove 30. Furthermore, the cooking stove 30 can be designed in such a way that it is possible for the drive assembly 40 to be accommodated in the cooking stove 30 in a position in which the entire drive assembly 40 is located at a lower level than the top surface 32 of the stove base 33. Hence, a stove base 33 where the drive assembly 40 is present may just as well be used for supporting a conventional pan as well, wherein the stove base 33 may be equipped with heating means like a conventional stove base. In other words, besides the fact that an interior space 35 is needed for accommodating the drive assembly 40, adjustments of the stove base 33 with respect to a conventional stove base can be kept to a minimum, wherein the capabilities of the stove base 33 to support a pan 10 and provide heat to pan 10 do not need to be deteriorated. Preferably, the drive assembly 40 is arranged such as to displaceable between the retracted position in the cooking stove 30 as mentioned and an operational position in the cooking stove 30, in which at least a portion of the pan fixating means 44 extends beyond the top surface 32 of the stove base 33.

Advantageously, the movement transferring means 41 and the pan fixating means 44 are closely arranged to each other as a unit. The close arrangement of the movement transferring means 41 and the pan fixating means 44 is different from a known arrangement in which the means 41, 44 are placed apart, wherein the movement transferring means 41 are in an area which is associated with a central area of a bottom 11 of the pan 10 to be used with the cooking stove 30, and wherein the pan fixating means 44 are in an area which is associated with a periphery of the bottom 11 of the pan 10.

## Claims

1. Cooking stove (30) having a drive assembly (40) for driving a food processing assembly (20) in a pan (10) to be used with the cooking stove (30), wherein the drive assembly (40) is associated with a stove base (33) of the cooking stove (30) for supporting a pan (10), wherein the drive assembly (40) comprises driven movement transferring means (41) which are movably arranged in the cooking stove (30), having a coupling portion (47, 48a, 48b) which is adapted to couple to the food processing assembly (20) for transferring a movement to the food processing assembly (20), **characterized in that** the drive assembly (40) further comprises pan fixating means (44) for engaging the pan (10) and thereby preventing the pan (10) from moving with the movement transferring means (41) during operation of the drive assembly (40), and wherein at least a component (41, 44) of the drive assembly (40) and at least a component (31) of the stove base (33) defining a top surface (32) of the stove base (33) are displaceable with respect to each other in the cooking stove (30).

2. Cooking stove (30) according to claim 1, being adapted to allow for a mutual position of the component (41, 44) of the drive assembly (40) and the component (31) of the stove base (33) in which the entire drive assembly (40) is located at a lower level than the top surface (32) of the stove base (33).

3. Cooking stove (30) according to claim 2, comprising a space (35) for accommodating the drive assembly (40) in the position in which the entire drive assembly (40) is located at a lower level than the top surface (32) of the stove base (33).

4. Cooking stove (30) according to claim 2, wherein the drive assembly (40) is displaceable between a first position in the cooking stove (30) and a second position in the cooking stove (30), wherein the first position is the position in which the entire drive assembly (40) is located at a lower level than the top surface (32) of the stove base (33), wherein the second position is a position which is at a higher level with respect to the top surface (32) of the stove base (33) than the first position, and in which at least a portion (45, 46) of the pan fixating means (44) extends beyond the top surface (32) of the stove base (33), and wherein the cooking stove (30) comprises means (60) for displacing the drive assembly (40) from one position to another.

5. Cooking stove (30) according to claim 4, wherein the drive assembly (40) is displaceable to a third position which is at a higher level with respect to the top surface (32) of the stove base (33) than the second position, and wherein the means (60) for displacing the drive assembly (40) are associated with means for detecting a force exerted on the pan fixating means (44) when the drive assembly (40) is in the third position.

6. Cooking stove (30) according to claim 1, wherein the movement transferring means (41) are rotatably arranged in the cooking stove (30).

7. Cooking stove (30) according to claim 1, wherein the movement transferring means (41) and the pan fixating means (44) are closely arranged to each other as a unit.

8. Cooking stove (30) according to claim 1, wherein the movement transferring means (41) comprise a shaft (41), wherein the pan fixating means (44) comprise a recess (45) having a standing wall (46) surrounding the shaft (41) as seen in a longitudinal direction of the shaft (41), and wherein an inner periphery of the standing wall (16) has a non-circular shape.

9. Pan (10) which is suitable to be used with a cooking stove (30) according to claim 1, **characterized by** a coupling assembly (50) which is arranged in a hole (14) in a bottom (11) of the pan (10), wherein the coupling assembly (50) comprises fixedly arranged means (53) for engaging the pan fixating means (44) of the drive assembly (40) of the cooking stove (30), and movably arranged means (51, 52) having coupling portions (56a, 56b, 57, 58) at opposite sides, wherein one of the coupling portions (56a, 56b, 57, 58) is a coupling portion (56a, 56b) for coupling to the coupling portion (47, 48a, 48b) of the movement transferring means (41) of the drive assembly (40) of the cooking stove (30), and wherein another of the coupling portions (56a, 56b, 57, 58) is a coupling portion (57, 58) for coupling to a food processing assembly (20) to be used in the pan (10).

10. Pan (10) according to claim 9, wherein the movably arranged means (51, 52) of the coupling assembly (50) are rotatably arranged in the pan (10).

11. Pan (10) according to claim 9, wherein the fixedly arranged means (53) of the coupling assembly (50) comprise an engaging portion (54) having a non-circular outer periphery.

12. Pan (10) according to claim 9, comprising a tube member (17) projecting from the bottom (11) at the inside of the pan (10), wherein the movably arranged means (51, 52) of the coupling assembly (50) comprise a member (52) projecting from the bottom (11) of the pan (10) at an inside of the pan (10) for supporting the food processing assembly (20) to be used in the pan (10), which member (52) extends inside the tube member (17), and wherein the tube member (17) is open at a free end (18).

13. Pan (10) according to claim 9, wherein an exterior surface of the bottom (11) is free from projecting members.

14. Cooking combination of a cooking stove (30) according to claim 1 and a pan (10) according to claim 9, wherein the pan (10) is placed on the top surface (32) of the stove base (33) of the cooking stove (30) with which the drive assembly (40) is associated, wherein the fixedly arranged means (53) of the coupling assembly (50) of the pan (10) and the pan fixating means (44) of the drive assembly (40) of the cooking stove (30) are in engagement with each other, and wherein one of the coupling portions (56a, 56b, 57, 58) of the movably arranged means (51, 52) of the coupling assembly (50) of the pan (10) is coupled to the coupling portion (47, 48a, 48b) of the movement transferring means (41) of the drive assembly (40) of the cooking stove (30).

15. Cooking combination according to claim 14, wherein another of the coupling portions (56a, 56b, 57, 58) of the movably arranged means (51, 52) of the coupling assembly (50) of the pan (10) is coupled to a food processing assembly (20) which is used in the pan (10).

## Patentansprüche

1. Kochherd (30), der eine Antriebseinheit (40) zum Antreiben einer Lebensmittelverarbeitungseinheit (20) in einem Topf (10) aufweist, die mit dem Kochherd (30) zu verwenden ist, wobei die Antriebseinheit (40) mit einer Herdbasis (33) des Kochherds (30) zum Tragen eines Topfs (10) verbunden ist, wobei die Antriebseinheit (40) angetriebene Bewegungsübertragungsmittel (41) umfasst, die beweglich im Kochherd (30) angeordnet sind, einen Kupplungsabschnitt (47, 48a, 48b) aufweisen, der ausgeführt ist, um die Lebensmittelverarbeitungseinheit (20) anzukoppeln, um eine Bewegung auf die Lebensmittelverarbeitungseinheit (20) zu übertragen, **dadurch gekennzeichnet,**
**dass** die Antriebseinheit (40) darüber hinaus Topfbefestigungsmittel (44) zum Einsetzen des Topfs (10) umfasst, und um dadurch zu verhindern, dass sich der Topf (10) während des Betriebs der Antriebseinheit (40) mit den Bewegungsübertragungsmitteln (41) bewegt, und wobei zumindest eine Komponente (41, 44) der Antriebseinheit (40) und zumindest eine die Oberfläche (32) der Herdbasis (33) definierende Komponente (31) der Herdbasis (33) im Verhältnis zueinander im Kochherd (30) verschiebbar sind.

2. Kochherd (30) nach Anspruch 1, der ausgeführt ist, um eine gegenseitige Position der Komponente (41, 44) der Antriebseinheit (40) und der Komponente (31) der Herdbasis (33) zu ermöglichen, in der sich die gesamte Antriebseinheit (40) auf einem niedrigeren Niveau befindet, als die Oberfläche (32) der Herdbasis (33).

3. Kochherd (30) nach Anspruch 2, einen Raum (35) zur Aufnahme der Antriebseinheit (40) in der Position umfassend, in der sich die gesamte Antriebseinheit (40) auf einem niedrigeren Niveau befindet, als die Oberfläche (32) der Herdbasis (33).

4. Kochherd (30) nach Anspruch 2, wobei die Antriebseinheit (40) zwischen einer ersten Position im Kochherd (30) und einer zweiten Position im Kochherd (30) verschoben werden kann, wobei die erste Position jene Position ist, in der sich die gesamte Antriebseinheit (40) auf einem niedrigeren Niveau befindet, als die Oberfläche (32) der Herdbasis (33), wobei die zweite Position eine Position ist, die sich im Verhältnis zur Oberfläche (32) der Herdbasis (33) auf einem höheren Niveau befindet, als die erste Position, und in der zumindest ein Abschnitt (45, 46) der Topfbefestigungsmittel (44) über die Oberfläche (32) der Herdbasis (33) hinausragt, und wobei der Kochherd (30) Mittel (60) zum Verschieben der Antriebseinheit (40) von einer Position in die andere umfasst.

5. Kochherd (30) nach Anspruch 4, wobei die Antriebseinheit (40) in eine dritte Position verschoben werden kann, die sich im Verhältnis zur Oberfläche (32) der Herdbasis (33) auf einem höheren Niveau befindet, als die zweite Position, und wobei die Mittel (60) zum Verschieben der Antriebseinheit (40) mit Mitteln zum Erfassen einer Kraft verbunden sind, die auf die Topfbefestigungsmittel (44) ausgeübt wird, wenn sich die Antriebseinheit (40) in der dritten Position befindet.

6. Kochherd (30) nach Anspruch 1, wobei die Bewegungsübertragungsmittel (41) drehend im Kochherd (30) angeordnet sind.

7. Kochherd (30) nach Anspruch 1, wobei die Bewegungsübertragungsmittel (41) und die Topfbefestigungsmittel (44) eng aneinander als eine Einheit angeordnet sind.

8. Kochherd (30) nach Anspruch 1, wobei die Bewegungsübertragungsmittel (41) eine Welle (41) umfassen, wobei die Topfbefestigungsmittel (44) eine Aussparung (45) umfassen, die eine stehende Wand (46) aufweist, die die Welle (41) in eine Längsrichtung der Welle (41) gesehen umgibt, und wobei ein Innenumfang der stehenden Wand (16) eine nicht kreisförmige Form aufweist.

9. Topf (10), der sich zur Verwendung mit einem Kochherd (30) nach Anspruch 1 eignet, durch eine Koppeleinheit (50) gekennzeichnet, die in einem Loch (14) in einem Boden (11) des Topfs (10) angeordnet ist, wobei die Koppeleinheit (50) fest angeordnete Mittel (53) zum Einsetzen der Topfbefestigungsmittel (44) der Antriebseinheit (40) des Kochherds (30) umfasst, sowie beweglich angeordnete Mittel (51, 52), die Kupplungsabschnitte (56a, 56b, 57, 58) an gegenüberliegenden Seiten aufweisen, wobei einer der Kupplungsabschnitte (56a, 56b, 57, 58) ein Kupplungsabschnitt (56a, 56b) zum Ankoppeln an den Kupplungsabschnitt (47, 48a, 48b) der Bewegungsübertragungsmittel (41) der Antriebseinheit (40) des Kochherds (30) ist, und wobei ein anderer der Kupplungsabschnitte (56a, 56b, 57, 58) ein Kupplungsabschnitt (57, 58) zum Ankoppeln an eine Lebensmittelverarbeitungseinheit (20) ist, die im Topf (10) zu benutzen ist.

10. Topf (10) nach Anspruch 9, wobei die beweglich angeordneten Mittel (51, 52) der Koppeleinheit (50) drehend im Topf (10) angeordnet sind.

11. Topf (10) nach Anspruch 9, wobei die fest angeordneten Mittel (53) der Koppeleinheit (50) einen Einsatzabschnitt (54) umfassen, der einen nicht kreisförmigen Außenumfang aufweist.

12. Topf (10) nach Anspruch 9, ein Rohrelement (17) umfassend, das aus dem Boden (11) an der Innenseite des Topfs (10) hervorragt, wobei die beweglich angeordneten Mittel (51, 52) der Koppeleinheit (50) ein Element (52) umfassen, das aus dem Boden (11) des Topfs (10) an einer Innenseite des Topfs (10) hervorragt, um die Lebensmittelverarbeitungseinheit (20), die im Topf (10) zu benutzen ist, zu tragen, wobei sich das Element (52) innerhalb des Rohrelements (17) erstreckt und wobei das Rohrelement (17) an einem freien Ende (18) offen ist.

13. Topf (10) nach Anspruch 9, wobei eine Außenfläche des Bodens (11) frei von hervorstehenden Elementen ist.

14. Kochkombination aus einem Kochherd (30) nach Anspruch 1 und einem Topf (10) nach Anspruch 9, wobei der Topf (10) auf der Oberfläche (32) der Herdbasis (33) des Kochherds (30) platziert wird, mit dem die Antriebseinheit (40) verbunden ist, wobei die fest angeordneten Mittel (53) der Koppeleinheit (50) des Topfs (10) und die Topfbefestigungsmittel (44) der Antriebseinheit (40) des Kochherds (30) miteinander in Eingriff stehen, und wobei einer der Kupplungsabschnitte (56a, 56b, 57, 58) der beweglich angeordneten Mittel (51, 52) der Koppeleinheit (50) des Topfs (10) an den Kupplungsabschnitt (47, 48a, 48b) der Bewegungsübertragungsmittel (41) der Antriebseinheit (40) des Kochherds (30) angekoppelt ist.

15. Kochkombination nach Anspruch 14, wobei ein anderer der Kupplungsabschnitte (56a, 56b, 57, 58) der beweglich angeordneten Mittel (51, 52) der Koppeleinheit (50) des Topfs (10) an eine Lebensmittelverarbeitungseinheit (20) angekoppelt ist, die im Topf (10) benutzt wird.

## Revendications

1. Réchaud de cuisson (30) possédant un ensemble d'entraînement (40) pour entraîner un ensemble de préparation culinaire (20) dans une casserole (10) destinée à être utilisée avec le réchaud de cuisson (30), dans lequel l'ensemble d'entraînement (40) est associé à une base de réchaud (33) du réchaud de cuisson (30) pour supporter une casserole (10), dans lequel l'ensemble d'entraînement (40) comprend des moyens de transfert de mouvement entraînés (41) qui sont agencés de façon mobile dans le réchaud de cuisson (30), possédant une portion d'accouplement (47, 48a, 48b) qui est adaptée pour s'accoupler à l'ensemble de préparation culinaire (20) pour transférer un mouvement à l'ensemble de préparation culinaire (20), **caractérisé en ce que**
l'ensemble d'entraînement (40) comprend en outre des moyens de fixation de casserole (44) pour entrer en prise avec la casserole (10) et ainsi empêcher la casserole (10) de se déplacer avec les moyens de transfert de mouvement (41) durant le fonctionnement de l'ensemble d'entraînement (40), et dans lequel au moins un composant (41, 44) de l'ensemble d'entraînement (40) et au moins un composant (31) de la base de réchaud (33) définissant une surface supérieure (32) de la base de réchaud (33) sont déplaçables l'un par rapport à l'autre dans le réchaud de cuisson (30).

2. Réchaud de cuisson (30) selon la revendication 1, étant adapté pour permettre une position mutuelle du composant (41, 44) de l'ensemble d'entraînement (40) et du composant (31) de la base de réchaud (33) dans laquelle l'ensemble d'entraînement entier (40) est situé à un niveau plus bas que la surface supérieure (32) de la base de réchaud (33).

3. Réchaud de cuisson (30) selon la revendication 2, comprenant un espace (35) pour loger l'ensemble d'entraînement (40) dans la position dans laquelle l'ensemble d'entraînement entier (40) est situé à un niveau plus bas que la surface supérieure (32) de la base de réchaud (33).

4. Réchaud de cuisson (30) selon la revendication 2, dans lequel l'ensemble d'entraînement (40) est déplaçable entre une première position dans le réchaud de cuisson (30) et une deuxième position dans le réchaud de cuisson (30), dans lequel la première position est la position dans laquelle l'ensemble d'entraînement entier (40) est situé à un niveau plus bas que la surface supérieure (32) de la base de réchaud (33), dans lequel la deuxième position est une position qui est à un niveau plus haut par rapport à la surface supérieure (32) de la base de réchaud (33) que la première position, et dans laquelle au moins une portion (45, 46) des moyens de fixation de casserole (44) s'étend au-delà de la surface supérieure (32) de la base de réchaud (33), et dans lequel le réchaud de cuisson (30) comprend des moyens (60) pour déplacer l'ensemble d'entraînement (40) d'une position à une autre.

5. Réchaud de cuisson (30) selon la revendication 4, dans lequel l'ensemble d'entraînement (40) est déplaçable à une troisième position qui est à un niveau plus haut par rapport à la surface supérieure (32) de la base de réchaud (33) que la deuxième position, et dans lequel les moyens (60) pour déplacer l'ensemble d'entraînement (40) sont associés à des moyens pour détecter une force exercée sur les moyens de fixation de casserole (44) lorsque l'ensemble d'entraînement (40) est dans la troisième position.

6. Réchaud de cuisson (30) selon la revendication 1, dans lequel les moyens de transfert de mouvement (41) sont agencés de façon rotative dans le réchaud de cuisson (30).

7. Réchaud de cuisson (30) selon la revendication 1, dans lequel les moyens de transfert de mouvement (41) et les moyens de fixation de casserole (44) sont agencés à proximité les uns des autres de façon monobloc.

8. Réchaud de cuisson (30) selon la revendication 1, dans lequel les moyens de transfert de mouvement (41) comprennent un arbre (41), dans lequel les moyens de fixation de casserole (44) comprennent un évidement (45) possédant une paroi verticale (46) entourant l'arbre (41) en vue dans une direction longitudinale de l'arbre (41), et dans lequel une périphérie intérieure de la paroi verticale (16) présente une forme non circulaire.

9. Casserole (10) qui est appropriée pour être utilisée avec un réchaud de cuisson (30) selon la revendication 1, **caractérisée par** un ensemble d'accouplement (50) qui est agencé dans un trou (14) dans un fond (11) de la casserole (10), dans laquelle l'ensemble d'accouplement (50) comprend des moyens agencés de façon fixe (53) pour entrer en prise avec les moyens de fixation de casserole (44) de l'ensemble d'entraînement (40) du réchaud de cuisson (30), et des moyens agencés façon mobile (51, 52) possédant des portions d'accouplement (56a, 56b, 57, 58) sur des côtés opposés, dans laquelle l'une des portions d'accouplement (56a, 56b, 57, 58) est une portion d'accouplement (56a, 56b) pour s'accoupler à la portion d'accouplement (47, 48a, 48b) des moyens de transfert de mouvement (41) de l'ensemble d'entraînement (40) du réchaud de cuisson (30), et dans laquelle une autre des portions d'accouplement (56a, 56b, 57, 58) est une portion d'accouplement (57, 58) pour s'accoupler à un ensemble de préparation culinaire (20) destiné à être utilisé dans la casserole (10).

10. Casserole (10) selon la revendication 9, dans laquelle les moyens agencés de façon mobile (51, 52) de l'ensemble d'accouplement (50) sont agencés de façon rotative dans la casserole (10).

11. Casserole (10) selon la revendication 9, dans laquelle les moyens agencés de façon fixe (53) de l'ensemble d'accouplement (50) comprennent une portion d'entrée en prise (54) possédant une périphérie extérieure non circulaire.

12. Casserole (10) selon la revendication 9, comprenant un organe tubulaire (17) faisant saillie à partir du fond (11) à l'intérieur de la casserole (10), dans laquelle les moyens agencés de façon mobile (51, 52) de l'ensemble d'accouplement (50) comprennent un organe (52) faisant saillie à partir du fond (11) de la casserole (10) à un intérieur de la casserole (10) pour supporter l'ensemble de préparation culinaire (20) destiné à être utilisé dans la casserole (10), lequel organe (52) s'étend à l'intérieur de l'organe tubulaire (17), et dans laquelle l'organe tubulaire (17) est ouvert à une extrémité libre (18).

13. Casserole (10) selon la revendication 9, dans laquelle une surface extérieure du fond (11) est dépourvue d'organes faisant saillie.

14. Combinaison à cuisson d'un réchaud de cuisson (30) selon la revendication 1 et d'une casserole (10) selon la revendication 9, dans laquelle la casserole (10) est placée sur la surface supérieure (32) de la base de réchaud (33) du réchaud de cuisson (30) auquel l'ensemble d'entraînement (40) est associé, dans laquelle les moyens agencés de façon fixe (53) de l'ensemble d'accouplement (50) de la casserole (10) et les moyens de fixation de casserole (44) de l'ensemble d'entraînement (40) du réchaud de cuisson (30) sont en prise les uns avec les autres, et dans laquelle l'une des portions d'accouplement (56a, 56b, 57, 58) des moyens agencés de façon mobile (51, 52) de l'ensemble d'accouplement (50) de la casserole (10) est accouplée à la portion d'accouplement (47, 48a, 48b) des moyens de transfert de mouvement (41) de l'ensemble d'entraînement (40) du réchaud de cuisson (30).

15. Combinaison à cuisson selon la revendication 14, dans laquelle une autre des portions d'accouplement (56a, 56b, 57, 58) des moyens agencés de façon mobile (51, 52) de l'ensemble d'accouplement (50) de la casserole (10) est accouplée à un ensemble de préparation culinaire (20) qui est utilisé dans la casserole (10).
